(19) **Europäisches Patentamt**

**European Patent Office**

**Office européen des brevets**

(11) **EP 1 493 528 A1**

(12) **EUROPEAN PATENT APPLICATION**

(43) Date of publication:
**05.01.2005 Bulletin 2005/01**

(51) Int Cl.⁷: **B23K 35/38**, B23K 26/14

(21) Application number: **04253950.2**

(22) Date of filing: **30.06.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK** | (72) Inventors:<br>• **Nakai, Tomoaki c/o Nippon Sanso Corporation Minato-ku, Tokyo (JP)**<br>• **Kamei, Toshikazu c/o Nippon Sanso Corporation Minato-ku Tokyo (JP)** |
| (30) Priority: **02.07.2003 JP 2003270529** | (74) Representative: **Smyth, Gyles Darren**<br>**Marks & Clerk,**<br>**57-60 Lincoln's Inn Fields**<br>**London WC2A 3LS (GB)** |
| (71) Applicant: **Nippon Sanso Corporation Tokyo (JP)** | |

(54) **Method for laser welding steel sheets and composite material**

(57)     A method for laser welding steel sheets, in particular tailored blanks, in which a gas mixture comprising at least one of argon, helium and nitrogen, and 20 to 50% by volume of a carbon dioxide gas, or a gas mixture comprising at least one of argon, helium and nitrogen, 10 to 40% by volume of a carbon dioxide gas and 1 to 5% by volume of an oxygen gas is used as a shield gas.

## FIG. 5

**EP 1 493 528 A1**

**Description**

BACKGROUND OF THE INVENTION

Field of the Invention

The present invention relates to a method for butt welding steel sheets used in automobile body components and the like by means of a laser beam, and to a composite material made of steel sheets welded by. this method.
This application claims priority from Japanese Patent Application No. 2003-270529 filed on July 2, 2003, the content of which is incorporated herein by reference.

Background Art

In the manufacture of automobiles and the like, there is employed a process for press forming a composite material (hereinafter referred to as a tailored blank material) made by making plural steel sheets of different thicknesses or different characteristics such as quality together into an integral sheet by butt welding. This process is used to manufacture members wherein required strength and formability vary with the portion.
In the manufacture of the tailored blank material, a laser welding method is often used when steel sheets are butt-welded. An argon gas is commonly used as a shield gas in the laser welding.
Japanese Patent Application, First Publication No. Hei 08-276290 discloses, as the laser welding method, a method for butt welding of band steel sheets at ends using a $CO_2$-Ar gas mixture as a shield gas.
As disclosed in Japanese Patent Application, First Publication No. Hei 06-328279, there is also known a method for laser welding steel sheets, which are laid one upon another, using a gas mixture containing 15 to 25% of a carbon dioxide gas and an inert gas such as argon gas, as an assist gas.
As disclosed in Japanese Patent No. 3176778, there is also known a method for laser welding steel sheets using Ar, He or an Ar-He gas mixture, each containing 0.5 to 10% by volume of oxygen, as a shield gas.
As disclosed in Japanese Patent No. 3383444, there is also known a laser welding method using one of an Ar gas containing 1 to 10% of $O_2$, a He gas containing 1 to 10% of $O_2$, an Ar gas containing 5 to 50% of $CO_2$, a He gas containing 5 to 50% of $CO_2$ and air as an atmospheric gas.
As disclosed in Japanese Patent No. 2842967, there is also known a laser welding method using one of $CO_2$, $O_2$, a gas mixture containing $CO_2$ and the other gas, and a gas mixture containing $O_2$ and the other gas, as a shield gas.
In laser welding, larger energy can be supplied locally to materials to be welded because of small beam diameter (commonly about 0.5 mm). Therefore, the welding bead width can be narrowed and also the welding speed can be increased.
Since the welding bead width decreases in laser welding, when there is a large local gap between the butt-welded steel sheets in the case of butt welding steel sheets, faulty welding arises at this portion, thus lowering the mechanical strength and formability of the welded portion. When using large-sized steel sheets, there arises a problem in that a large gap may be formed, resulting in low mechanical strength and poor formability of the welded portion.
In laser welding, since greater energy is locally supplied to steel sheets and the welding speed increases, the hardness of the welded portion increases by quick heating and cooling of the steel sheets, resulting in poor formability of the welded portion.
In the tailored blank material made of plural steel sheets of different thicknesses, the thickness of the weld metal decreases gradually from the thicker steel sheet to the thinner steel sheet.
In the case in which inclination of the outer surface of the weld metal with respect to the steel sheet is steep, cracks may be caused by stress concentration during press forming and damage may be caused to the press die by an edge of the thicker steel sheet. Therefore, it is required to make inclination of the outer surface of the weld metal less steep.

SUMMARY OF THE INVENTION

Under these circumstances, the present invention has been made, and objects thereof are to provide:

(1) a welding method which can prevent faulty welding and improve formability of the welded portion even when there is a large gap between the butt-welded steel sheets, and a composite material, and
(2) a welding method which can make inclination of the outer surface of the weld metal less steep when steel sheets of different thicknesses are butt-welded, and a composite material.

The method for laser welding steel sheets according to the first embodiment of the present invention comprises using, as a shield gas, a gas mixture comprising at least one of argon, helium and nitrogen, and 20 to 50% by volume of a carbon dioxide gas.

The method for laser welding steel sheets according to the first embodiment of the present invention may be a method wherein the steel sheets are butt-welded before press forming.

In the method for laser welding steel sheets, the shield gas may contain less than 1% by volume of an oxygen gas.

In the method for laser welding steel sheets, the steel sheets to be butt-welded may be steel sheets of different thicknesses or different kinds.

The composite material according to the first embodiment of the present invention comprises the steel sheets welded by the laser welding method according to the first embodiment of the present invention.

The method for laser welding steel sheets according to the second embodiment of the present invention comprises using, as a shield gas, a gas mixture comprising at least one of argon, helium and nitrogen, 10 to 40% by volume of a carbon dioxide gas and 1 to 5% by volume of an oxygen gas.

The above method for laser welding steel sheets may be a method wherein the steel sheets are butt-welded before press forming.

In the above method for laser welding steel sheets, the steel sheets to be butt-welded may be steel sheets of different thicknesses or different kinds.

The composite material according to the second embodiment of the present invention comprises the steel sheets welded by the laser welding method according to the second embodiment of the present invention.

Since a gas mixture containing 20 to 50% by volume of a carbon dioxide gas or a gas mixture containing 10 to 40% by volume of a carbon dioxide gas and 1 to 5% by volume of an oxygen gas is used, the present invention exerts the following effects.

(1) The use of a shield gas containing a carbon dioxide gas makes it possible to achieve greater weld penetration than in the case of using a shield gas composed only of an inert gas. Therefore, it is made possible to prevent faulty welding and improve the mechanical strength and formability of the welded portion, even when there is a large gap between the butt-welded steel sheets.

As a result, the welded portion can be prevented from breaking when press-forming the welded steel sheets. Accuracy requirement for butting alignment can also be relaxed, thus making the manufacture easier.

(2) In laser welding, concentration of larger amounts of energy supplied to a small area causes quick heating and cooling of the steel sheets, resulting in an increase in hardness of the welded portion and poor formability thereof.

Since the shield gas containing an oxidative gas such as a carbon dioxide gas is used in the present invention, it is made possible to increase toughness and to improve the formability.

Consequently, the welded portion can be prevented from breaking during press forming.

(3) The use of the shield gas containing a carbon dioxide gas makes it possible to cause an appropriate degree of oxidation of the molten metal and control the wettability and fluidity of the molten metal to appropriate levels.

As a result, unsatisfactory formation of welds due to excessive penetration can be prevented, and therefore the mechanical strength and formability of the welded portion can be improved.

(4) Since the capability to cause appropriate degree of oxidation of the molten metal makes it possible to control the wettability and fluidity of the molten metal to appropriate levels, inclination of the outer surface of the weld metal with respect to the steel sheet can be made less steep during butt-welding steel sheets of different thickness.

As a result, such problems can be prevented from occurring as cracks in the welded portion during press forming and damage caused to the press die by the edge of the thicker steel sheet.

(5) The use of the shield gas containing a carbon dioxide gas makes it possible to prevent spatter (slag or metal grains splashed on a welded portion while welding) from occurring during welding.

Thus the welded material can be prevented from being degraded in appearance due to the adhesion of spatter. The die used in press forming can also be prevented from being damaged by spatter.

(6) Capability of increasing the weld penetration and preventing faulty welding eliminates the need for a high-output laser or a hybrid laser, resulting in lower equipment cost.

(7) Capability of increasing the weld penetration and preventing faulty welding makes it possible to increase the welding speed. As a result, productivity can be improved.

BRIEF DESCRIPTION OF THE DRAWINGS

Fig. 1 is the graph showing a relationship between the component concentration of a shield gas and the back bead width.

Fig. 2 is a photograph showing a cross section of the welded portion when Ar is used as a shield gas.

Fig. 3 is a photograph showing a cross section of the welded portion when an Ar-$CO_2$ gas mixture is used as a shield gas.

Fig. 4 is a photograph showing a cross section of the welded portion when an Ar-$O_2$-$CO_2$ gas mixture is used as a shield gas.

Fig. 5 is a schematic view showing a method for the measurement of a minimum weld metal thickness.

Fig. 6 is a graph showing the relationship between the component concentration of a shield gas and the minimum weld metal thickness.

Fig. 7 is a graph showing the relationship between the component concentration of a shield gas and the hardness of a weld metal.

Fig. 8 is a photograph showing a cross section of the welded portion when Ar is used as a shield gas.

Fig. 9 is a photograph showing a cross section of the welded portion when an Ar-$O_2$ gas mixture is used as a shield gas.

Fig. 10 is a photograph showing a cross section of the welded portion when an Ar-$CO_2$ gas mixture is used as a shield gas.

Fig. 11 is a photograph showing a cross section of the welded portion when an Ar-$CO_2$ gas mixture or an Ar-$O_2$ gas mixture is used as a shield gas.

Fig. 12 is a photograph showing a cross section of the welded portion when an Ar-$CO_2$ gas mixture is used as a shield gas.

Fig. 13 is a graph showing the relationship between the component concentration of a shield gas and the back bead width when an Ar-$O_2$-$CO_2$ gas mixture is used as the shield gas.

Fig. 14 is a graph showing the relationship between the component concentration and the minimum weld metal thickness when an Ar-$O_2$-$CO_2$ gas mixture is used as the shield gas.

Fig. 15 is a graph showing the relationship between the component concentration and the hardness of a weld metal when an Ar-$O_2$-$CO_2$ gas mixture is used as the shield gas.

PREFERRED EMBODIMENTS

In present invention, steel sheets are butt-welded by means of a laser beam. A general-purpose YAG laser or $CO_2$ laser may be used to generate the laser beam. Welding is performed in an atmosphere of a shield gas that is supplied toward the steel sheets.

The welding method of the present invention uses, as a shield gas, a gas mixture comprising at least one of argon, helium and nitrogen, and 20 to 50% by volume of a carbon dioxide gas.

The shield gas may be a gas mixture containing 20 to 50% by volume of a carbon dioxide gas, with the rest comprising at least one of argon, helium and nitrogen.

The concentration of the carbon dioxide gas may be not less than 25% by volume, or not less than 30% by volume. The concentration of the carbon dioxide gas may also be not more than 45% by volume, or not more than 40% by volume.

The shield gas may also contain less than 1% by volume of an oxygen gas.

To sum up, a gas mixture comprising at least one of argon, helium and nitrogen, 20 to 50% by volume of a carbon dioxide gas and less than 1% by volume of an oxygen gas may be used.

A concentration of the carbon dioxide gas lower than the range described above tends to cause insufficient weld penetration, leading to lower strength and poor formability of the welded portion. A concentration of the carbon dioxide gas higher than the range described above, on the other hand, tends to cause uneven beads. When the oxygen concentration is too high, unsatisfactory weld formation and/or spatter tend to be caused.

According to the present invention, a gas mixture comprising at least one of argon, helium and nitrogen, 10 to 40% by volume of a carbon dioxide gas and 1 to 5% by volume of an oxygen gas may also be used as the shield gas.

The shield gas may be a gas mixture containing 10 to 40% by volume of a carbon dioxide gas and 1 to 5% by volume of an oxygen gas, with the rest comprising at least one of argon, helium and nitrogen.

The concentration of the carbon dioxide gas may be not less than 15% by volume, or not less than 20% by volume. The concentration of the carbon dioxide gas may be not more than 35% by volume, or not more than 30% by volume.

The concentration of the oxygen gas may be not less than 1.5% by volume, or not less than 2% by volume. The concentration of the oxygen gas may be not more than 4.5% by volume, or not more than 4% by volume.

A concentration of the carbon dioxide gas lower than the range described above tends to cause insufficient weld penetration, leading to lower strength and poor formability of the welded portion. A concentration of the carbon dioxide gas higher than the range described above tends to cause uneven beads.

A concentration of the oxygen gas lower than the range described above tends to cause insufficient weld penetration, leading to lower strength and poor formability of the welded portion. When the oxygen concentration is higher than the range described above, unsatisfactory weld formation and/or spatter tend to be caused.

The shield gas may also contain other components such as inevitable impurities.

The steel sheet to which the present invention is applied is, for example, a galvanized steel sheet.

The welding method of the present invention may be applied to steel sheets which are to be press-formed in a subsequent process, such as tailored blank material used in a tailored blank process.

The tailored blank material refers to a composite material made by putting sheets of different thicknesses or different kinds together into an integral sheet by butt welding. The tailored blank process refers to a manufacturing process of making the tailored blank material from plural sheets and processing it by press forming.

The present invention is preferably applied, in particular, to an unequal-thickness butt welding process in which steel sheets of different thicknesses are butt-welded with each other.

The present invention can be applied to the manufacture of automobile components such as automobile body components.

Since a gas mixture containing 20 to 50% by volume of a carbon dioxide gas or a gas mixture containing 10 to 40% by volume of a carbon dioxide gas and 1 to 5% by volume of an oxygen gas is used, the present invention exerts the following effects.

(1) The use of a shield gas containing a carbon dioxide gas makes it possible to achieve greater weld penetration than in the case of using a shield gas composed only of an inert gas, thereby achieving satisfactory weld penetration having a uniform width in the direction of depth.

Since sufficient weld penetration can be achieved, it is made possible to prevent faulty welding and improve the mechanical strength and formability of the welded portion, even when there is a large gap between the butt-welded steel sheets.

As a result, the welded portion can be prevented from breaking when press-forming the welded steel sheets. Accuracy requirement for butting alignment can also be relaxed, thus making the manufacture easier.

The present invention is advantageously applied to the manufacture of a tailored blank material. Since large-sized steel sheets are often used for the tailored blank material, the butt joint tends to involve a gap. By applying the present invention, however, faulty welding can be surely prevented while improving the strength and the formability of the welded portion.

The mechanism in which the use of the gas mixture described above increases the weld penetration is believed to be as follows: Since a carbon dioxide gas as an oxidative gas causes an appropriate degree of oxidation of the welded portion, oxidation heat is generated and the capacity to absorb the laser beam energy is increased. This is assumed to cause efficient heating of the welded portion and thereby increase the weld penetration.

(2) In laser welding, concentration of larger amounts of energy supplied to a small area causes quick heating and cooling of the steel sheets, resulting in an increase in hardness of the welded portion and poor formability thereof.

Since the shield gas containing a carbon dioxide gas is used in the present invention, it is made possible to form an oxide from the carbon dioxide in the welded portion, thereby suppressing the growth of austenite grains that would cause an increase in hardness.

As a result, it is made possible to decrease the hardness of the welded portion, to increase toughness, and to improve the formability.

Consequently, the welded portion can be prevented from breaking during press forming.

(3) The use of the shield gas containing a carbon dioxide gas makes it possible to cause an appropriate degree of oxidation of the molten metal and control the wettability and fluidity of the molten metal to appropriate levels.

As a result, unsatisfactory formation of welds due to excessive penetration can be prevented, and therefore the mechanical strength and formability of the welded portion can be improved.

In the case in which a shield gas comprising an oxygen gas and an inert gas is used, in contrast, oxidation power of oxygen may cause excessive weld penetration, and formation of the welded portion may become unstable due to fluidity of the molten metal.

(4) Since the capability to cause appropriate degree of oxidation of the molten metal makes it possible to control the wettability and fluidity of the molten metal to appropriate levels, inclination of the outer surface of the weld metal with respect to the steel sheet can be made less steep during butt-welding steel sheets of different thickness.

As a result, such problems can be prevented from occurring as cracks in the welded portion during press forming and damage caused to the press die by the edge of the thicker steel sheet.

In the case in which a shield gas comprising an oxygen gas and an inert gas is used, in contrast, fluidity of the molten metal may make the inclination of the outer surface of the weld metal steeper.

(5) The use of the shield gas containing a carbon dioxide gas makes it possible to prevent spatter (slag or metal grains splashed on a welded portion while welding) from occurring during welding.

Thus the welded material can be prevented from being degraded in appearance due to the adhesion of spatter.

The die used in press forming can also be prevented from being damaged by spatter.

In the case in which a shield gas comprising an oxygen gas and an inert gas is used, in contrast, the oxidation reaction occurs more actively and spatter becomes more likely to occur.

The present invention makes it possible to obtain welded products having smoother surfaces without adhesion of spatter, and is therefore advantageously applied particularly to the manufacture of automotive components.

(6) Capability of increasing the weld penetration and preventing faulty welding makes it possible to render sufficient mechanical strength and formability to the welded portion even when the laser output power is low.

As a result, the need for a high-output laser or a hybrid laser is eliminated, resulting in lower equipment cost.

(7) Capability of increasing the weld penetration and preventing faulty welding makes it possible to increase the welding speed. As a result, productivity can be improved.

Effects of the present invention will now be illustrated by way of specific examples.

(Test 1: Measurement of back bead width)

(Test Example 1-1)

Two steel sheets galvanized on both sides (coating weight: 45 $g/m^2$) having different thicknesses (0.7 mm and 1.4 mm) were butt-welded by means of a laser. Welding conditions were as follows. In the following description, the steel sheet having a thickness of 0.7 mm may be referred to as a thinner sheet and the steel sheet having a thickness of 1.4 mm may be referred to as a thicker sheet.

Edge treatment of steel sheet: Cutting by laser beam
Laser used: YAG laser
Laser output power: 2kW
Welding method: Unequal-thickness butt welding in the downhand
Target shift: 0 mm
Welding speed: 3.0 m/min
Gap (clearance between two steel sheets): 0 mm
Shield gas: Ar-$CO_2$ gas mixture (or Ar)
Flow rate of shield gas: 40 liters/min
Shield gas supplying nozzle: Coaxial double-shielded nozzle

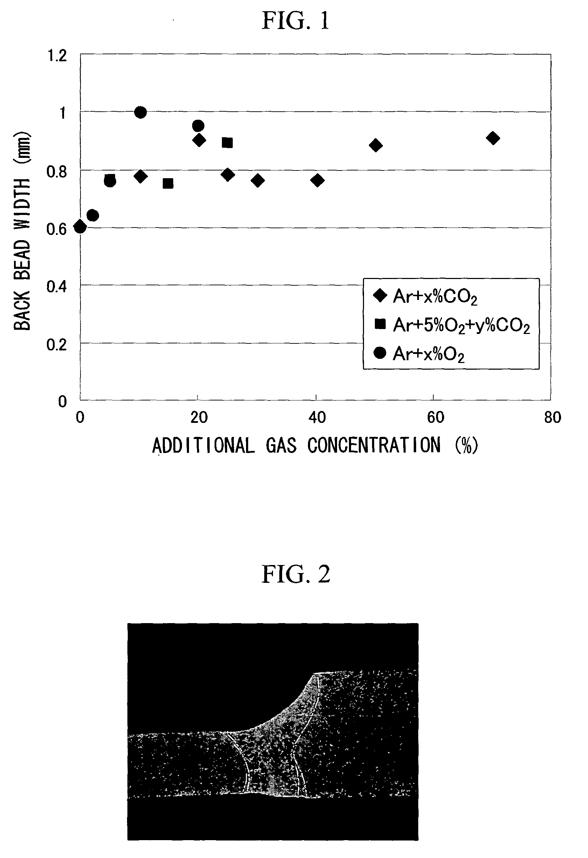

The measurement results of the back bead width (average value) are shown in Fig. 1. The additional gas concentration given in the figure is a carbon dioxide gas concentration (x% by volume) in the shield gas.

(Test Example 1-2)

Steel sheets were butt-welded by using an Ar-$O_2$-$CO_2$ gas mixture (or Ar-$O_2$ gas mixture) as the shield gas. Welding conditions were the same as in Test Example 1-1, except for setting the oxygen concentration in the shield gas to 5% by volume.

The measurement results of the back bead width are shown in Fig. 1. The additional gas concentration given in the figure is the sum of an oxygen gas concentration (5% by volume) and a carbon dioxide gas concentration (y% by volume) in the shield gas.

(Test Example 1-3)

Steel sheets were butt-welded by using an Ar-$O_2$ gas mixture (or Ar gas) as the shield gas. Other welding conditions were the same as in Test Example 1-1.

The measurement results of the back bead width are shown in Fig. 1. The additional gas concentration given in the figure is the oxygen gas concentration (x% by volume) in the shield gas.

In the case in which an Ar-$CO_2$ gas mixture was used, sufficient back bead width (0.7 mm or more) was obtained when the carbon dioxide gas concentration was 10% by volume or higher, as shown in Fig. 1.

In all of the test examples, the back bead was formed without being interrupted in the longitudinal direction.

(Test 2: Evaluation of penetration form)

(Test Example 2)

Steel sheets were butt-welded by using Ar, an Ar-$CO_2$ gas mixture ($CO_2$ concentration: 30% by volume) or

an Ar-$O_2$-$CO_2$ gas mixture ($O_2$ concentration: 5% by volume, $CO_2$ concentration: 20% by volume) as the shield gas. Other welding conditions were the same as in Test Example 1-1.

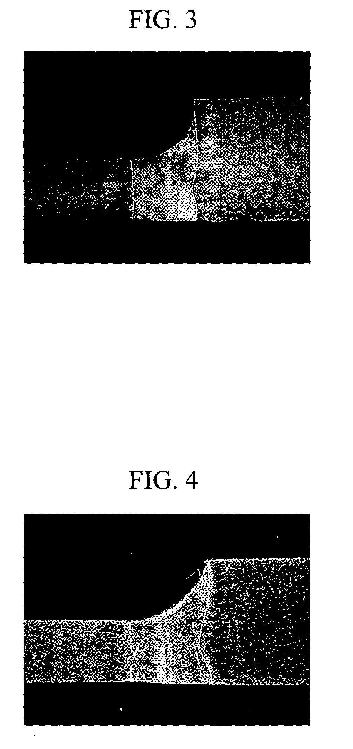

Fig. 2 shows a cross section of the welded portion when Ar was used, Fig. 3 shows a cross section of welded portion when an Ar-$CO_2$ gas mixture was used, and Fig. 4 shows a cross section of welded portion when an Ar-$O_2$-$CO_2$ gas mixture was used.

As shown in Fig. 2, the back bead width (on bottom surface) was narrower than the front bead width (on top surface) when Ar was used.

As shown in Fig. 3 and Fig. 4, there was no significant difference between the front bead width (on top surface) and the back bead width (on bottom surface) when an Ar-$CO_2$ gas mixture or an Ar-$O_2$-$CO_2$ gas mixture was used, and weld penetration having substantially uniform width in the direction of depth was obtained.

(Test 3: Evaluation of gap tolerance)

(Test Example 3)

Steel sheets were butt-welded by using Ar, an Ar-$CO_2$ gas mixture, an Ar-$O_2$ gas mixture or an Ar-$O_2$-$CO_2$ gas mixture as the shield gas, with a gap between two steel sheets being set in a range from 0 to 0.3 mm, and a target shift being set to 0 mm when the gap is 0 mm and 0.1 mm when the gap is not less than 0.1 mm (thicker sheet was irradiated with laser beam at a position 0.1 mm offset from the butt joint). Other welding conditions were the same as in Test Example 1-1. The welded sheets were checked for the back bead formation.

The results are shown in Table 1, where the weld was rated as "P" when back beads were observed and rated as "F" when back beads were not observed.

(Table 1)

| Type of gas | Gap (mm) | | | | |
|---|---|---|---|---|---|
| | 0 | 0.1 | 0.2 | 0.25 | 0.3 |
| Ar | P | P | P | F | F |
| Ar + 10%$CO_2$ | P | P | P | F | F |
| Ar + 20%$CO_2$ | P | P | P | P | F |
| Ar + 30%$CO_2$ | P | P | P | P | F |
| Ar + 70%$CO_2$ | P | P | P | P | F |
| Ar + 2%$O_2$ | P | P | P | F | F |
| Ar + 5%$O_2$ | P | P | P | P | F |
| Ar + 10%$O_2$ | P | P | P | P | P |
| Ar + 20%$O_2$ | P | P | P | P | P |
| Ar + 5%$O_2$ + 20%$CO_2$ | P | P | P | P | F |
| P: Good welding (back beads were observed) | | | | | |
| F: Impossible to weld (back beads were not observed) | | | | | |

As shown in Table 1, excellent gap tolerance (welding can be performed when the gap is not less than 0.25 mm) was obtained when the carbon dioxide gas concentration was not less than 20% by volume in the case in which an Ar-$CO_2$ gas mixture was used.

(Test 4: Measurement of thickness of weld metal)

(Test Example 4)

Steel sheets were butt-welded by using Ar, an Ar-$CO_2$ gas mixture, an Ar-$O_2$ gas mixture or an Ar-$O_2$-$CO_2$ gas mixture ($O_2$ concentration: 5% by volume) as the shield gas, with a gap being set in a range to 0.25 mm, and a target shift being set to 0.1 mm. Other welding conditions were the same as in Test Example 1-1.

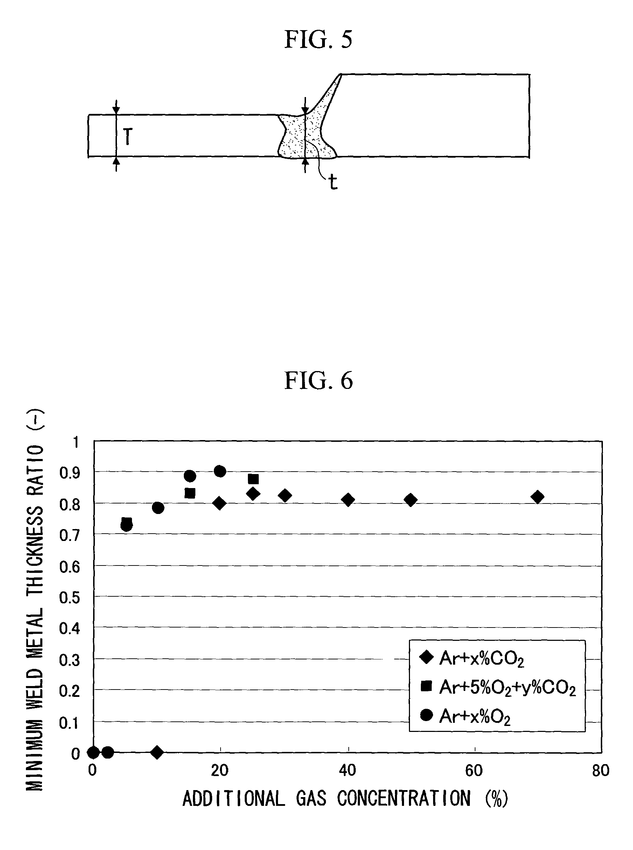

As shown in Fig. 5, minimum thickness t of the weld metal of the welded portion was measured and a ratio to the thickness of T (0.7 mm) of the thinner sheet, (t/T), was calculated.

The results are shown in Fig. 6. In the figure, the additional gas concentration is the concentration of the component other than Ar, similar to Test 1. When welding cannot be performed, the weld metal thickness ratio was zero.

As shown in Fig. 6, in the case of using the Ar-$CO_2$ gas mixture, the thickness of the weld metal showed a sufficient value (t/T is not less than 0.8) when the carbon dioxide gas concentration was not less than 20% by volume.

(Test 5: Measurement of hardness of weld metal)

(Test Example 5)

Steel sheets were butt-welded by using Ar, an Ar-$CO_2$ gas mixture, an Ar-$O_2$ gas mixture or an Ar-$O_2$-$CO_2$ gas mixture ($O_2$ concentration: 5% by volume) as the shield gas, and then a Vickers hardness (maximum hardness) of the weld metal was measured. Other welding conditions were the same as in Test Example 1-1.

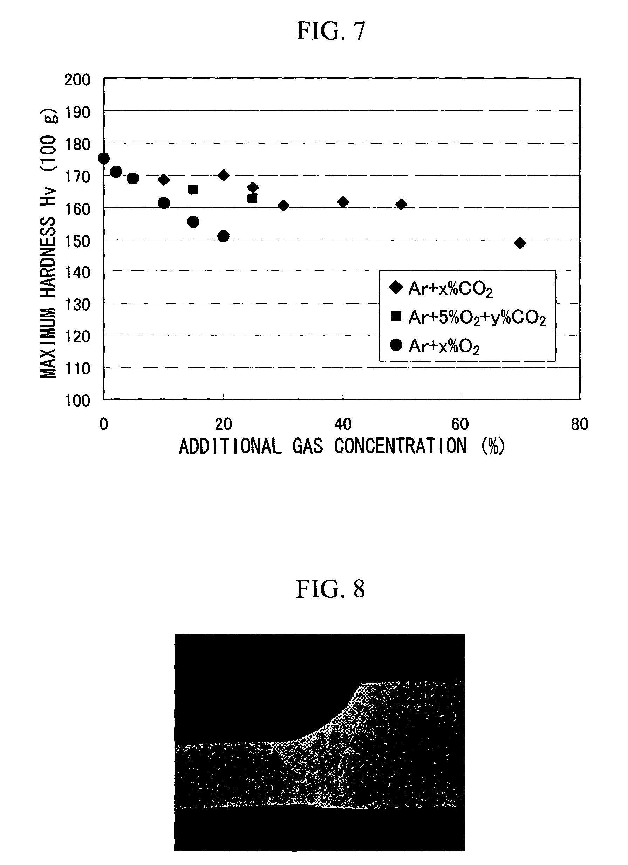

The results are shown in Fig. 7. In the figure, the additional gas concentration is the concentration of the component other than Ar, similar to Test 1.

The Vickers hardness is a hardness determined in the following manner. That is, a quadrangular pyramid-shaped diamond indenter having a diagonal angle of 136° was imposed on the surface of a test piece under a static load and the load was divided by the surface area of a square recession formed. The Vickers hardness Hv can be determined by the following equation:

$$\text{Vickers hardness Hv} = 1.8544 \ p/d$$

where p is a load (kg) and d is an average length (mm) of diagonal line of square recession.

As shown in Fig. 7, in the case of using the Ar-$CO_2$ gas mixture, the hardness could be controlled to a low value (not more than 170) when the carbon dioxide gas concentration was not less than 20% by volume.

(Test 6: Evaluation of inclination of welded portion)

(Test Example 6)

Steel sheets were butt-welded by using Ar, an Ar-$O_2$ gas mixture ($O_2$ concentration: 10% by volume) or an Ar-$CO_2$ gas mixture ($CO_2$ concentration: 30% by volume) as the shield gas. Other welding conditions were the same as in Test Example 1-1.

The inclination of the outer surface (top surface) of the welded portion in which the thickness of the weld metal decreases gradually from the thicker sheet to the thinner sheet was evaluated.

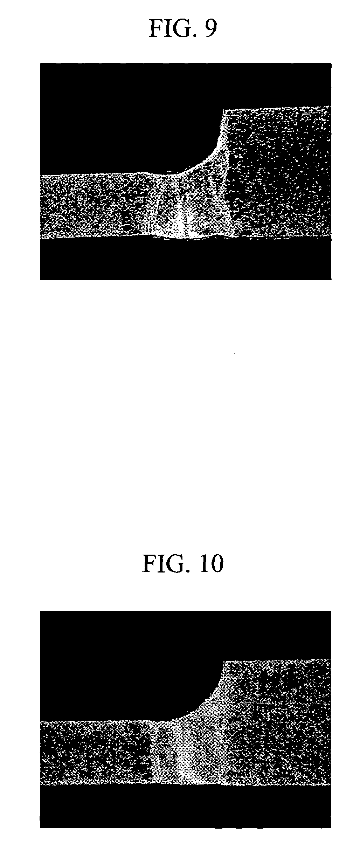

Fig. 8 shows a cross section of the welded portion when Ar is used, Fig. 9 is a cross section of the welded portion when an Ar-$O_2$ gas mixture is used, and Fig. 10 shows a cross section of the welded portion when an Ar-$CO_2$ gas mixture is used as a shield gas.

As shown in Figs. 8 to 10, an angle of inclination (maximum angle of inclination) of the outer surface of the weld metal remarkably increased when the Ar-$O_2$ gas mixture was used, while an angle of inclination comparatively decreased when the Ar-$CO_2$ gas mixture was used.

(Test 7: Confirmation of occurrence of spatter)

(Test Example 7)

Steel sheets were butt-welded by using an Ar-$CO_2$ gas mixture ($CO_2$ concentration: 30% by volume) or an Ar-$O_2$ gas mixture ($O_2$ concentration: 10% by volume) as the shield gas. Other welding conditions were the same as in Test Example 1-1.

The welded portion was observed and the occurrence of spatter was confirmed.

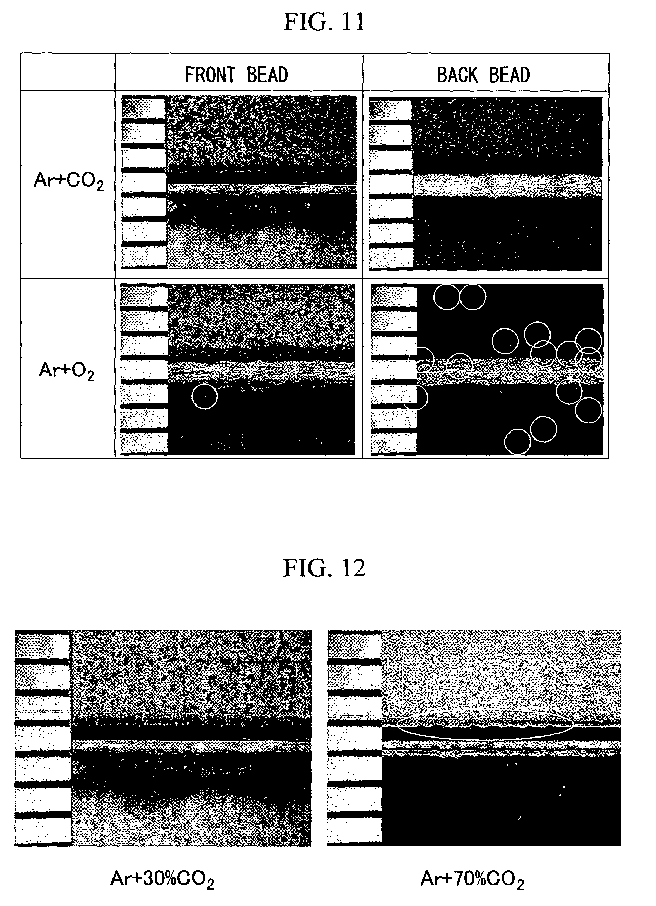

Fig. 11 shows the appearance (front beads and back beads) of the welded portion. In the figure, the upper portion from the welded portion extending in the horizontal direction is a thicker sheet and the lower portion is a thinner sheet.

As shown in Fig. 11, spatter(as ringed in Fig. 11) was observed when the Ar-$O_2$ gas mixture was used, while spatter was not observed when the Ar-$CO_2$ gas mixture was used.

(Test 8: Evaluation (1) of evenness of beads)

(Test Example 8)

Steel sheets were butt-welded by using an Ar-$CO_2$ gas mixture ($CO_2$ concentration: 30% by volume or 70% by volume) as the shield gas and evenness of the front beads was visually evaluated. Other welding conditions were the same as in Test Example 1-1.

Fig. 12 shows appearance (front beads) of the welded portion. In the figure, the upper portion from the welded portion extending in the horizontal direction is a thicker sheet and the lower portion is a thinner sheet.

As shown in Fig. 12, even beads were formed when the carbon dioxide gas concentration in the $Ar$-$CO_2$ gas mixture is 30% by volume, while uneven beads with the chipped edge (as surrounded by a white border in Fig. 12) at the thicker sheet side were formed when the carbon dioxide gas concentration is 70% by volume.

(Test 9: Evaluation (2) of evenness of beads)

(Test Example 9)

Steel sheets were butt-welded by using $Ar$, an $Ar$-$CO_2$ gas mixture, or $CO_2$ as the shield gas, and then evenness of the front bead was visually evaluated. Other welding conditions were the same as in Test Example 1-1. The results are shown in Table 2.

(Table 2)

| Type of gas | Evenness of front beads |
|---|---|
| $Ar$ | P |
| $Ar + 10\%CO_2$ | P |
| $Ar + 20\%CO_2$ | P |
| $Ar + 30\%CO_2$ | P |
| $Ar + 40\%CO_2$ | P |
| $Ar + 50\%CO_2$ | P |
| $Ar + 55\%CO_2$ | F |
| $Ar + 60\%CO_2$ | F |
| $Ar + 70\%CO_2$ | F |
| $Ar + 80\%CO_2$ | F |
| $Ar + 90\%CO_2$ | F |
| $100\%CO_2$ | F |
| P: Even | |
| F: Uneven | |

As shown in Table 2, excellent bead evenness was obtained when the carbon dioxide gas concentration is not more than 50% by volume.

(Test 10: Measurement of back bead width)

(Test Example 10)

Steel sheets were butt-welded by using an $Ar$-$O_2$-$CO_2$ gas mixture (or $Ar$-$O_2$ gas mixture) as the shield gas. The oxygen concentration in the shield gas was set within a range from 0.5 to 20% by volume. Other welding conditions were the same as in Test Example 1-1.

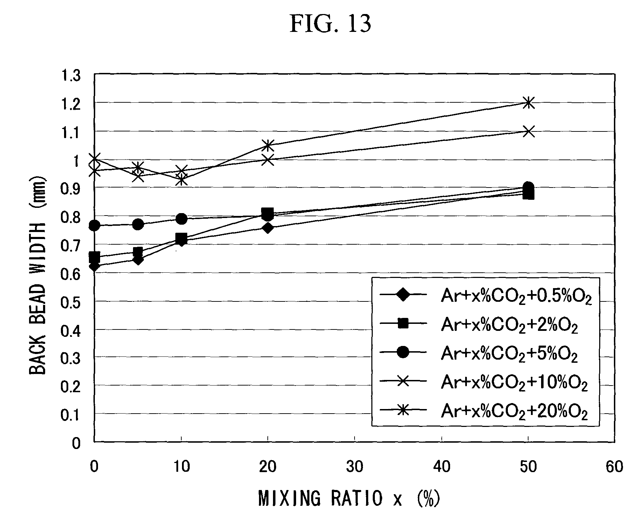

The measurement results of the back bead width are shown in Fig. 13. In the figure, a mixing ratio is the carbon dioxide gas concentration (x% by volume) in the shield gas.

As shown in Fig. 13, in the case in which the oxygen gas concentration was 0.5% by volume or 2% by volume, the back bead width showed a satisfactory value (not less than 0.7 mm) when the carbon dioxide gas concentration was not less than 10% by volume.

In the case in which the oxygen gas concentration was not less than 5% by volume, the back bead width showed a sufficient value (not less than 0.7 mm) regardless of the carbon dioxide gas concentration.

(Test 11: Evaluation of gap tolerance)

(Test Example 11)

Steel sheets were butt-welded by using Ar, an Ar-$O_2$ gas mixture or an Ar-$O_2$-$CO_2$ gas mixture as the shield gas, with a gap between two steel sheets being set in a range from 0 to 0.3 mm, and a target shift being set to 0 mm when the gap is 0 mm and 0.1 mm when the gap is not less than 0.1 mm. Other welding conditions were the same as in Test Example 1-1. The welded sheets were checked for the back bead formation.

The results are shown in Table 3, where the weld was rated as "P" when back beads were observed and rated as "F" when back beads were not observed.

(Table 3)

| Type of gas | Gap (mm) | | | | |
|---|---|---|---|---|---|
| | 0 | 0.1 | 0.2 | 0.25 | 0.3 |
| Ar | P | P | P | F | F |
| Ar + 0.5%$O_2$ | P | P | P | F | F |
| Ar + 5%$CO_2$ + 0.5%$O_2$ | P | P | P | F | F |
| Ar + 10%$CO_2$ + 0.5%$O_2$ | P | P | P | F | F |
| Ar + 20%$CO_2$ + 0.5%$O_2$ | P | P | P | P | F |
| Ar + 50%$CO_2$ + 0.5%$O_2$ | P | P | P | P | F |
| Ar | P | P | P | F | F |
| Ar + 2%$O_2$ | P | P | P | F | F |
| Ar + 5%$CO_2$ + 2%$O_2$ | P | P | P | F | F |
| Ar + 10%$CO_2$ + 2%$O_2$ | P | P | P | P | F |
| Ar + 20%$CO_2$ + 2%$O_2$ | P | P | P | P | F |
| Ar + 50%$CO_2$ + 2%$O_2$ | P | P | P | P | F |
| Ar | P | P | P | F | F |
| Ar + 5%$O_2$ | P | P | P | P | F |
| Ar + 5%$CO_2$ + 5%$O_2$ | P | P | P | P | F |
| Ar + 10%$CO_2$ + 5%$O_2$ | P | P | P | P | F |
| Ar + 20%$CO_2$ + 5%$O_2$ | P | P | P | P | F |
| Ar + 50%$CO_2$ + 5%$O_2$ | P | P | P | P | F |
| Ar | P | P | P | F | F |
| Ar + 10%$O_2$ | P | P | P | P | P |
| Ar + 5%$CO_2$ + 10%$O_2$ | P | P | P | P | P |
| Ar + 10%$CO_2$ + 10%$O_2$ | P | P | P | P | P |
| Ar + 20%$CO_2$ + 10%$O_2$ | P | P | P | P | P |
| Ar + 50%$CO_2$ + 10%$O_2$ | P | P | P | P | P |
| Ar | P | P | P | F | F |
| Ar + 20%$O_2$ | P | P | P | P | P |
| Ar + 5%$CO_2$ + 20%$O_2$ | P | P | P | P | P |
| Ar + 10%$CO_2$ + 20%$O_2$ | P | P | P | P | P |
| Ar + 20%$CO_2$ + 20%$O_2$ | P | P | P | P | P |
| Ar + 50%$CO_2$ + 20%$O_2$ | P | P | P | P | P |
| P: Good welding (back beads were observed) | | | | | |
| F: Impossible to weld (back beads were not observed) | | | | | |

As shown in Table 3, in the case in which the oxygen gas concentration was 0.5% by volume, excellent gap tolerance (welding can be performed when the gap is not more than 0.25 mm) was obtained when the carbon dioxide gas concentration was not less than 20% by volume.

In the case in which the oxygen gas concentration was 2% by volume, excellent gap tolerance was obtained when the carbon dioxide gas concentration was not less than 10% by volume.

In the case in which the oxygen gas concentration was not less than 5% by volume, excellent gap tolerance was obtained regardless of the carbon dioxide gas concentration.

(Test 12: Measurement of thickness of weld metal)

(Test Example 12)

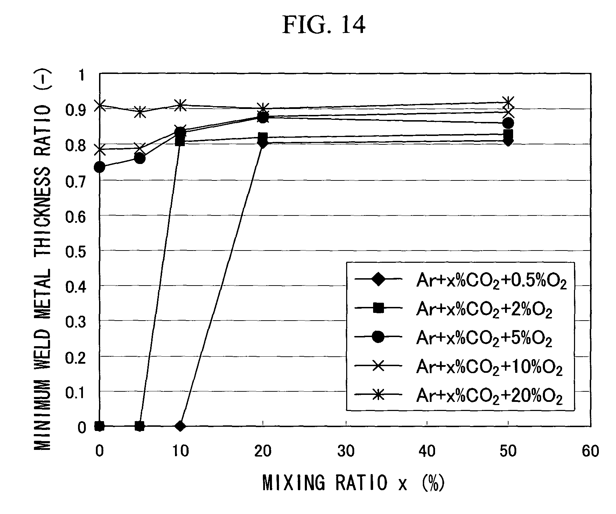

Steel sheets were butt-welded by using an $Ar-O_2-CO_2$ gas mixture (or an $Ar-O_2$ gas mixture) as the shield gas, with a gap being set to 0.25 mm and a target shift being set to 0.1 mm. Other welding conditions were the same as in Test Example 1-1. Minimum thickness t of the weld metal of the welded portion was measured and a ratio to the thickness of T (0.7 mm) of the thinner sheet, (t/T), was calculated.
The results are shown in Fig. 14. In the figure, the mixing ratio is the carbon dioxide gas concentration (x% by volume) in the shield gas.
As shown in Fig. 14, in the case in which the oxygen gas concentration was 0.5% by volume, the thickness of the weld metal showed a sufficient value (t/T is not less than 0.8) when the carbon dioxide gas concentration was not less than 20% by volume.
In the case in which the oxygen gas concentration was from 2 to 10% by volume, the thickness of the weld metal showed a sufficient value (t/T is not less than 0.8) when the carbon dioxide gas concentration was not less than 10% by volume.
In the case in which the oxygen gas concentration was 20% by volume, the thickness of the weld metal showed a sufficient value (t/T is not less than 0.8) regardless of the carbon dioxide gas concentration.

(Test 13: Measurement of hardness of weld metal)

(Test Example 13)

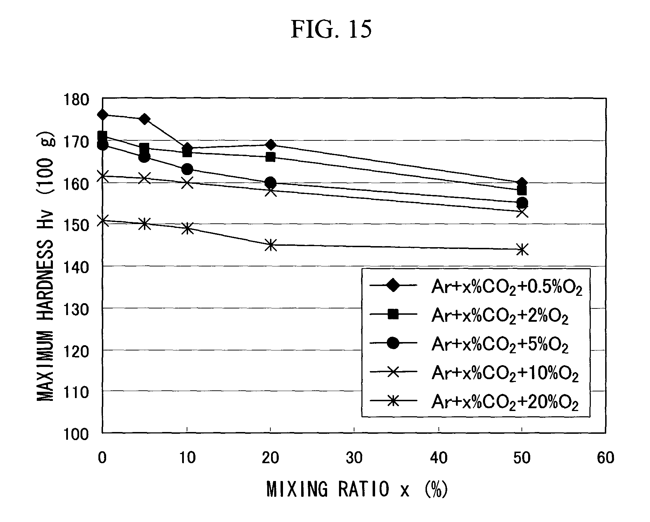

Steel sheets were butt-welded by using an $Ar-O_2-CO_2$ gas mixture (or an $Ar-O_2$ gas mixture) as the shield gas, and then a Vickers hardness (maximum hardness) of the weld metal was measured. Other welding conditions were the same as in Test Example 1-1.
The results are shown in Fig. 15. In the figure, the mixing ratio is the carbon dioxide gas concentration (x% by volume) in the shield gas.
As shown in Fig. 15, in the case in which the oxygen gas concentration was 0.5% by volume, the hardness of the weld metal could be controlled to a low value (not more than 170) the carbon dioxide gas concentration was not less than 10% by volume.
In the case in which the oxygen gas concentration was not less than 2% by volume, the hardness of the weld metal could be controlled to a low value (not more than 170) regardless of the carbon dioxide gas concentration.
The above test results are summarized in Tables 4 to 9.
In Table 4, the test results for the $Ar-CO_2$ gas mixture are summarized. In Tables 5 to 9, the test results for the $Ar-O_2-CO_2$ gas mixture are summarized.
In Tables 5 to 9, the results obtained by evaluating inclination of the welded portion, confirmation of occurrence of spatter and evenness of beads in the same manner as in Tests 6 to 9 using the same $Ar-O_2-CO_2$ gas mixture as that used in Tests 10 to 13 are summarized.
The back bead width (tests 1 and 10) of not less than 0.7 mm was rated as "P".
Regarding gap tolerance (tests 3 and 11), the case where back beads were observed was rated as "P".
The minimum weld metal thickness ratio (tests 4 and 12) of not less than 0.8 mm was rated as "P".
Regarding inclination of the weld portion (test 6), the case where a maximum angle of inclination of the outer surface (top surface) of the weld metal with respect to the steel sheet is almost the same as that in the case of using Ar (Fig. 8) was rated as "P", while the case where a maximum angle of inclination is remarkably larger than that in the case of using Ar was rated as "F".
Regarding spatter(test 7), the occurrence of spatter of the welded portion was confirmed. The case where spatter was not observed was rated as "P", while the case where spatter was observed was rated as "F".
Regarding evenness of beads (tests 8 and 9), the case where the front bead width is approximately even was rated as "P".
The hardness (tests 5 and 13) of not more than 170 was rated as "P".
Regarding penetration form (test 2), the case where satisfactory weld penetration having a uniform width in the direction of depth was obtained was rated as "P".

(Table 4)

| Type of gas | Ar | Ar + CO$_2$ | | | |
|---|---|---|---|---|---|
| CO$_2$ concentration (% by volume) | - | CO$_2$ < 10% | 10% ≤ CO$_2$ < 20% | 20% ≤ CO$_2$ ≤ 50% | 50% < CO$_2$ |
| O$_2$ concentration (% by volume) | - | - | - | - | - |
| Back bead width | F | F | P | P | P |
| Gap tolerance | F | F | F | P | P |
| Minimum weld metal thickness ratio | F | F | F | P | P |
| Inclination of welded portion | P | P | P | P | P |
| Spatter | P | P | P | P | P |
| Evenness of beads | P | P | P | P | F |
| Hardness | F | F | P | P | P |
| Unevenness of penetration form | F | F | F | P | P |

(Table 4) (continued)

| Type of gas | Ar + O$_2$ | | | Ar + CO$_2$ + O$_2$ |
|---|---|---|---|---|
| CO$_2$ concentration (% by volume) | - | - | - | 10% ≤ CO$_2$ ≤ 40% |
| O$_2$ concentration (% by volume) | O$_2$ < 5% | 5% ≤ O$_2$ ≤ 10% | 10% < O$_2$ | 1% ≤ O$_2$ ≤ 5% |
| Back bead width | F | P | P | P |
| Gap tolerance | F | P | P | P |
| Minimum weld metal thickness ratio | F | F | P | P |
| Inclination of welded portion | P | F | F | P |
| Spatter | P | F | F | P |
| Evenness of beads | P | P | P | P |
| Hardness | F | P | P | P |
| Unevenness of penetration form | F | P | P | P |

Back bead width of not less than 0.7 mm was rated as "P".
Gap tolerance of not less than 0.25 mm was rated as "P".
Minimum weld metal thickness ratio of not less than 0.8 was rated as "P".
Hardness of not more than 170 mm was rated as "P".

EP 1 493 528 A1

(Table 5)

| Type of gas | Ar | Ar + $CO_2$ + $O_2$ | | | |
|---|---|---|---|---|---|
| $CO_2$ concentration (% by volume)<br>$O_2$ concentration (% by volume) | -<br>- | $CO_2 < 10\%$<br>$O_2 < 1\%$ | $10\% \leq CO_2 < 20\%$<br>$O_2 < 1\%$ | $20\% \leq CO_2 \leq 50\%$<br>$O_2 < 1\%$ | $50\% < CO_2$<br>$O_2 < 1\%$ |
| Back bead width | F | F | P | P | P |
| Gap tolerance | F | F | F | P | P |
| Minimum weld metal thickness ratio | F | F | F | P | P |
| Inclination of welded portion | P | P | P | P | P |
| Spatter | P | P | P | P | P |
| Evenness of beads | P | P | P | P | F |
| Hardness | F | F | P | P | P |

(Table 6)

| Type of gas | Ar | Ar + $CO_2$ + $O_2$ | | |
|---|---|---|---|---|
| $CO_2$ concentration (% by volume)<br>$O_2$ concentration (% by volume) | -<br>- | $CO_2 < 10\%$<br>$1\% \leq O_2 < 4\%$ | $10\% \leq CO_2 \leq 40\%$<br>$1\% \leq O_2 < 4\%$ | $40\% < CO_2$<br>$1\% \leq O_2 < 4\%$ |
| Back bead width | F | F | P | P |
| Gap tolerance | F | F | P | P |
| Minimum weld metal thickness ratio | F | F | P | P |
| Inclination of welded portion | P | P | P | P |
| Spatter | P | P | P | P |
| Evenness of beads | P | P | P | F |
| Hardness | F | P | P | P |

(Table 7)

| Type of gas | Ar | Ar + CO$_2$ + O$_2$ | | |
|---|---|---|---|---|
| CO$_2$ concentration (% by volume)<br>O$_2$ concentration (% by volume) | -<br>- | CO$_2$ < 10%<br>4% $\leq$ O$_2$ $\leq$ 5% | 10% $\leq$ CO$_2$ $\leq$ 40%<br>4% $\leq$ O$_2$ $\leq$ 5% | 40% < CO$_2$<br>4% $\leq$ O$_2$ $\leq$ 5% |
| Back bead width | F | P | P | P |
| Gap tolerance | F | F | P | P |
| Minimum weld metal thickness ratio | F | F | P | P |
| Inclination of welded portion | P | P | P | P |
| Spatter | P | P | P | P |
| Evenness of beads | P | P | P | F |
| Hardness | F | P | P | P |

(Table 8)

| Type of gas | Ar | Ar + CO$_2$ + O$_2$ | | |
|---|---|---|---|---|
| CO$_2$ concentration (% by volume)<br>O$_2$ concentration (% by volume) | -<br>- | CO$_2$ < 10%<br>5% < O$_2$ $\leq$ 10% | 10% $\leq$ CO$_2$ < 20%<br>5% < O$_2$ $\leq$ 10% | 20% $\leq$ CO$_2$ $\leq$ 50%<br>5% < O$_2$ $\leq$ 10% |
| Back bead width | F | P | P | P |
| Gap tolerance | F | P | P | P |
| Minimum weld metal thickness ratio | F | F | P | P |
| Inclination of welded portion | P | F | F | F |
| Spatter | P | F | F | F |
| Evenness of beads | P | P | P | P |
| Hardness | F | P | P | P |

EP 1 493 528 A1

(Table 9)

| Type of gas | Ar | Ar + CO$_2$ + O$_2$ | | |
|---|---|---|---|---|
| CO$_2$ concentration (% by volume) | - | CO$_2$ < 10% | 10% ≤ CO$_2$ < 20% | 20% ≤ CO$_2$ ≤ 50% |
| O$_2$ concentration (% by volume) | - | 10% < O$_2$ | 10% < O$_2$ | 10% < O$_2$ |
| Back bead width | F | P | P | P |
| Gap tolerance | F | P | P | P |
| Minimum weld metal thickness ratio | F | P | P | P |
| Inclination of welded portion | P | F | F | F |
| Spatter | P | F | F | F |
| Evenness of beads | P | P | P | P |
| Hardness | F | P | P | P |

As shown in Table 4, in the case of using the Ar-CO$_2$ gas mixture, excellent results were obtained in all evaluation items when the carbon dioxide gas concentration was from 20 to 50% by volume.

As shown in Table 5, in the case of using the Ar-$O_2$-$CO_2$ gas mixture having an oxygen concentration of less than 1% by volume, excellent results, which are almost the same as that in the case of using the Ar-$CO_2$ gas mixture (carbon dioxide gas concentration: 20 to 50% by volume) were obtained when the carbon dioxide gas concentration was from 20 to 50% by volume.

As shown in Tables 6 and 7, in the case of using the Ar-$O_2$-$CO_2$ gas mixture having a carbon dioxide gas concentration of 10 to 40% by volume and an oxygen gas concentration of 1 to 5% by volume, excellent results were obtained in all evaluation items.

As shown in Tables 8 and 9, in the case of using the Ar-$O_2$-$CO_2$ gas mixture having an oxygen gas concentration of more than 5% by volume, poor results were obtained in at leaset any one of the evaluation items.

While the invention has been described in connection with the preferred embodiments, it is not intended to limit the scope of the invention to the particular form set forth, but, on the contrary, it is intended to cover addition of constitutions, omissions, substitutions, and modifications as may be included within the spirit and scope of the invention as defined by the appended claims.

**Claims**

1. A method for laser welding steel sheets, comprising using, as a shield gas, a gas mixture comprising at least one of argon, helium and nitrogen, and 20 to 50% by volume of a carbon dioxide gas.

2. The method for laser welding steel sheets according to claim 1,
   wherein the steel sheets are butt-welded before press forming.

3. The method for laser welding steel sheets according to claim 1,
   wherein the shield gas contains less than 1% by volume of an oxygen gas.

4. The method for laser welding steel sheets according to claim 1,
   wherein the steel sheets to be butt-welded are steel sheets of different thicknesses or different kinds of materials.

5. A composite material comprising the steel sheets welded by the laser welding method of claim 1.

6. A method for laser welding steel sheets, which comprising using, as a shield gas, a gas mixture comprising at least one of argon, helium and nitrogen, 10 to 40% by volume of a carbon dioxide gas and 1 to 5% by volume of an oxygen gas.

7. The method for laser welding steel sheets according to claim 6,
   wherein the steel sheets are butt-welded before press forming.

8. The method for laser welding steel sheets according to claim 6,
   wherein the steel sheets to be butt-welded are steel sheets of different thicknesses or different kinds of materials.

9. A composite material comprising the steel sheets welded by the laser welding method of claim 6.

## FIG. 1

## FIG. 2

FIG. 3

FIG. 4

## FIG. 5

## FIG. 6

# FIG. 7

# FIG. 8

FIG. 9

FIG. 10

## FIG. 11

| | FRONT BEAD | BACK BEAD |
|---|---|---|
| $Ar+CO_2$ | | |
| $Ar+O_2$ | | |

## FIG. 12

Ar+30%$CO_2$                    Ar+70%$CO_2$

FIG. 13

## FIG. 14

FIG. 15

**European Patent Office**

## EUROPEAN SEARCH REPORT

Application Number

EP 04 25 3950

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 1 250 610 A (THE BRITISH OXYGEN COMPANY LIMITED) 20 October 1971 (1971-10-20)<br>* the whole document * | 1,5 | B23K35/38<br>B23K26/14 |
| X | EP 1 022 087 A (LINDE TECH GASE GMBH) 26 July 2000 (2000-07-26)<br>* the whole document * | 1,5 | |
| X | DE 101 24 345 A (LINDE AG) 21 November 2002 (2002-11-21)<br>* the whole document * | 1,5 | |
| X | PATENT ABSTRACTS OF JAPAN vol. 0071, no. 93 (M-238), 24 August 1983 (1983-08-24)<br>& JP 58 093592 A (MITSUBISHI JUKOGYO KK), 3 June 1983 (1983-06-03)<br>* abstract * | 1,5 | |
| X | PATENT ABSTRACTS OF JAPAN vol. 1996, no. 10, 31 October 1996 (1996-10-31)<br>& JP 8 141763 A (KAWASAKI STEEL CORP), 4 June 1996 (1996-06-04)<br>* abstract * | 1,5 | **TECHNICAL FIELDS SEARCHED** (Int.Cl.7)<br><br>B23K |
| X | WO 02/43918 A (HERRMANN JOHANN ; LINDE AG (DE)) 6 June 2002 (2002-06-06)<br>* abstract *<br>* claims 1,4,5,7 * | 1,3,5,6, 9 | |
| X | US 2002/008094 A1 (LEFEBVRE PHILIPPE ET AL) 24 January 2002 (2002-01-24)<br>* examples * | 1-9 | |

-/--

The present search report has been drawn up for all claims

| Place of search | Date of completion of the search | Examiner |
|---|---|---|
| Munich | 12 October 2004 | Caubet, J-S |

## EUROPEAN SEARCH REPORT

European Patent Office

**Application Number**

EP 04 25 3950

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 02/16071 A (AIR LIQUIDE ; MATILE OLIVIER (FR); BONNET CHRISTIAN (FR); SOUDURE AUTO) 28 February 2002 (2002-02-28) * the whole document * | 1,2,4-9 | |
| | | | **TECHNICAL FIELDS SEARCHED (Int.Cl.7)** |

The present search report has been drawn up for all claims

| Place of search | Date of completion of the search | Examiner |
|---|---|---|
| Munich | 12 October 2004 | Caubet, J-S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

**ANNEX TO THE EUROPEAN SEARCH REPORT
ON EUROPEAN PATENT APPLICATION NO.**                    EP 04 25 3950

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2004

| Patent document cited in search report | | Publication date | Patent family member(s) | | Publication date |
|---|---|---|---|---|---|
| GB 1250610 | A | 20-10-1971 | DE | 1903325 A1 | 07-08-1969 |
| EP 1022087 | A | 26-07-2000 | DE | 19901900 A1 | 20-07-2000 |
| | | | EP | 1022087 A2 | 26-07-2000 |
| DE 10124345 | A | 21-11-2002 | DE | 10124345 A1 | 21-11-2002 |
| JP 58093592 | A | 03-06-1983 | JP | 62043800 B | 16-09-1987 |
| JP 8141763 | A | 04-06-1996 | JP | 3383444 B2 | 04-03-2003 |
| WO 0243918 | A | 06-06-2002 | DE | 10063166 A1 | 06-06-2002 |
| | | | DE | 10063165 A1 | 06-06-2002 |
| | | | AU | 3321602 A | 11-06-2002 |
| | | | WO | 0243918 A1 | 06-06-2002 |
| | | | EP | 1339525 A1 | 03-09-2003 |
| | | | US | 2004094522 A1 | 20-05-2004 |
| US 2002008094 | A1 | 24-01-2002 | FR | 2809647 A1 | 07-12-2001 |
| | | | AT | 255975 T | 15-12-2003 |
| | | | AU | 773440 B2 | 27-05-2004 |
| | | | AU | 4205901 A | 06-12-2001 |
| | | | BR | 0102156 A | 28-05-2002 |
| | | | CA | 2349765 A1 | 30-11-2001 |
| | | | DE | 60101416 D1 | 22-01-2004 |
| | | | DE | 60101416 T2 | 07-10-2004 |
| | | | DK | 1160048 T3 | 29-03-2004 |
| | | | EP | 1160048 A1 | 05-12-2001 |
| | | | EP | 1380380 A2 | 14-01-2004 |
| | | | ES | 2211746 T3 | 16-07-2004 |
| | | | JP | 2001340981 A | 11-12-2001 |
| | | | NZ | 511355 A | 20-12-2002 |
| | | | PT | 1160048 T | 30-04-2004 |
| | | | TW | 504424 B | 01-10-2002 |
| WO 0216071 | A | 28-02-2002 | FR | 2813031 A1 | 22-02-2002 |
| | | | AU | 8409701 A | 04-03-2002 |
| | | | EP | 1313590 A1 | 28-05-2003 |
| | | | WO | 0216071 A1 | 28-02-2002 |
| | | | JP | 2004525766 T | 26-08-2004 |
| | | | US | 2003173343 A1 | 18-09-2003 |

EPO FORM P0459

For more details about this annex : see Official Journal of the European Patent Office, No. 12/82